(19) Europäisches Patentamt
European Patent Office
Office européen des brevets

(11) EP 4 296 501 A1

(12) EUROPEAN PATENT APPLICATION
published in accordance with Art. 153(4) EPC

(43) Date of publication:
27.12.2023 Bulletin 2023/52

(51) International Patent Classification (IPC):
F02M 55/02 (2006.01)

(21) Application number: 22795656.2

(22) Date of filing: 21.04.2022

(52) Cooperative Patent Classification (CPC):
F02M 55/02; Y02T 10/30

(86) International application number:
PCT/JP2022/018356

(87) International publication number:
WO 2022/230743 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.04.2021 JP 2021076987

(71) Applicant: Usui Co., Ltd.
Sunto-gun, Shizuoka 411-8610 (JP)

(72) Inventor: SUZUKI, Kosuke
Sunto-gun, Shizuoka 411-8610 (JP)

(74) Representative: Isarpatent
Patent- und Rechtsanwälte
Barth Hassa Peckmann & Partner mbB
Friedrichstraße 31
80801 München (DE)

(54) FUEL RAIL

(57) A concentration of the stress due to a fuel pressure is avoided at a communication port between a fuel passage of a fuel rail body and a branch hole and the surrounding portion of the communication port at which the maximum stress is generated. A fuel rail having a fuel rail body 1 provided with a fuel passage 2 in a axial center direction of the fuel rai body 1, a boss 3 is provided on an outer peripheral surface of the fuel rai body 1, a receiving recess 5 of a mating member 4 is provided on an inner periphery of the boss 3, a branch hole 7 is provided between one end portion 6 of the receiving recess 5 of the boss 3 and the fuel passage 2 of the fuel rail body 1 for making the fuel passage 2 communicate with the receiving recess 5, the one end portion 6 being nearer to the fuel rail body 1 than the other end portion, and an axial length of the branch hole 7 is greater than a wall thickness of the fuel rail body 1.

Fig. 1

**Description**

TECHNICAL FIELD

The present invention relates to a connection structure of a plurality of bosses and a fuel rail body in a fuel rail provided with the fuel rail body and the plurality of bosses.

BACKGROUND ART

A conventional gasoline engine car generally uses a fuel rail having a fuel rail body provided with a fuel passage formed in an axial direction of the fuel rail body where a plurality of bosses is formed on an outer peripheral surface of the fuel rail body to protrude from the outer peripheral surface of the fuel rail body at equal intervals. On each of the bosses of the above described fuel rail, a receiving recess (102) is formed for receiving a mating member (101) as shown in Patent Document 1 and Fig. 11. A branch hole (106) is provided between one end portion (104) of the receiving recess (102) and a fuel passage (105) of a fuel rail body (103) for making the fuel passage (105) communicate with an inner periphery of a boss (100), where the one end portion (104) is nearer to the fuel rail body (103) than the other end portion.

However, since the fuel pressure has been increased in recent years, when the above described conventional fuel rail is used, the stress due to the fuel pressure is concentrated on a communication port (107) between the fuel passage (105) of the fuel rail body (103) and the branch hole (106). Thus, the maximum stress is generated at the communication port (107) and the surrounding portion of the communication port (107). Therefore, it is important to manage the strength at the communication port (107) between the fuel passage (105) and the branch hole (106) and the surrounding portion of the communication port (107).

In addition, a car using hydrogen gas as a fuel can be listed as the car using the high pressure system similar to the above described gasoline engine car. It is considered that the same problem as the above described gasoline engine car occurs also in the car using the hydrogen gas as a fuel.

In order to solve the above described problem, various methods have been conventionally considered. For example, a wall thickness of the fuel rail body and the boss is made thicker than the conventional one, an outer diameter of the fuel rail body is made larger than that of the conventional one, an inner diameter of the fuel rail body is made smaller than the conventional one, or a high-strength steel is used as the material of the fuel rail body and the boss. Patent Document 1: Japanese Patent Application Publication No. H10-205674

DISCLOSURE OF THE INVENTION

[Problems to be Solved by the Invention]

However, when the above described conventional solution method is used, there is a possibility of causing the following problems. Namely, when the wall thickness of the fuel rail body and the boss is made thicker than the conventional one, the weight becomes heavy. Thus, there are problems of the deterioration of the fuel consumption performance and the increase of the product cost. When the outer diameter of the fuel rail body is made larger, the layout performance deteriorates and the weight becomes heavy. Thus, there are problems of the deterioration of the fuel consumption performance and the increase of the product cost.

When the inner diameter of the fuel rail body is made smaller, it is difficult to suppress the pressure pulsation when injecting the fuel. When the high-strength steel is used as the material of the fuel rail body and the boss, the manufacturing cost becomes high

The present invention is made for solving the above described problems. The present invention relates to a fuel rail particularly used for a liquid fuel such as gasoline and a gas fuel such as hydrogen gas and aims for obtaining the fuel rail capable of avoiding the concentration of the stress due to the fuel pressure at the communication port between the fuel passage of the fuel rail body and the branch hole and the surrounding portion of the communication port at which the maximum stress is generated without making the wall thickness of the fuel rail body and the boss thicker than the conventional one, without changing the outer diameter and the inner diameter of the fuel rail body and without using the special material for the fuel rail body and the boss.

[Means for Solving the Problem]

The first invention of the present invention solves the above described problem and discloses a fuel rail assembled to an engine having a plurality of cylinders, the fuel rail including: a fuel rail body provided with a fuel passage in an axial center direction of the fuel rail body, wherein a boss is provided on an outer peripheral surface of the fuel rail body to protrude from the outer peripheral surface, a receiving recess of a mating member is provided on an inner periphery of the boss, a branch hole is provided between one end portion of the receiving recess of the boss and the fuel passage of the fuel rail body for making the fuel passage communicate with the receiving recess, the one end portion being nearer to the fuel rail body than the other end portion, and an axial length of the branch hole is greater than a wall thickness of the fuel rail body.

The second invention of the present invention discloses a fuel rail assembled to an engine having a plurality of cylinders, the fuel rail including: a fuel rail body provided with a fuel passage in an axial center direction of the fuel rail body, wherein a boss is provided on an outer peripheral surface of the fuel rail body to protrude from the outer peripheral surface, a receiving recess of a mating member is provided on an inner periphery of the boss, a branch hole is provided between one end portion of the receiving recess of the boss and the fuel passage of the fuel rail body for making the fuel passage communicate with the receiving recess, the one end portion being nearer to the fuel rail body than the other end portion, and a length H which is calculated by subtracting a wall thickness of the fuel rail body from an axial length of the branch hole is 7 mm or more.

In the above described first and second inventions, it is possible that a cross-sectional area of the branch hole is uniform in an axial direction of the branch hole.

In the above described first and second inventions, it is possible that a cross-sectional area of the branch hole is greater at both end portions of the branch hole than a center portion of the branch hole and it is possible that a cross-sectional area of the branch hole is greater at one end portion of the branch hole than the other portion of the branch hole.

[Effects of the Invention]

In the first and second inventions, as described above, the branch hole is provided between one end portion of the receiving recess of the boss and the fuel passage of the fuel rail body for making the fuel passage communicate with the receiving recess, the one end portion being nearer to the fuel rail body than the other end portion, and the axial length of the branch hole is greater than the wall thickness of the fuel rail body. Because of this, the stress due to the fuel pressure can be reduced at the communication port between the fuel passage of the fuel rail body and the branch hole and the surrounding portion of the communication port regardless of the wall thickness of the fuel rail body and the boss, the outer diameter or the inner diameter of the fuel rail body and the material of the fuel rail body and the boss.

BRIEF DESCRIPTION OF THE DRAWINGS

Fig. 1 is an enlarged cross-sectional view showing the embodiments 1 to 15 of the first and second inventions of the present invention.
Fig. 2 is an entire perspective view of the embodiments 1 to 24.
Fig. 3 is an analysis graph of the embodiments 1 to 15.
Fig. 4 is an enlarged cross-sectional view showing the embodiments 16 to 24.
Fig. 5 is an analysis graph of the embodiments 16 to 24.
Fig. 6 is an enlarged cross-sectional view showing the embodiment 25.
Fig. 7 is an enlarged cross-sectional view showing the embodiment 26.
Fig. 8 is an enlarged cross-sectional view showing the embodiment 27.
Fig. 9 is an enlarged cross-sectional view showing the embodiment 28.
Fig. 10 is an enlarged cross-sectional view showing the embodiment 29.

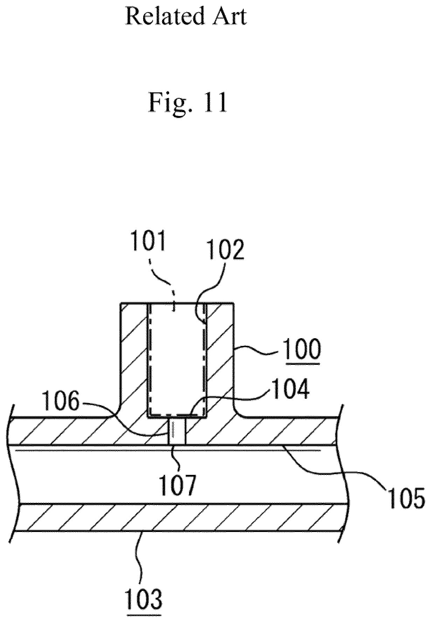

Fig. 11 is an enlarged cross-sectional view showing the conventional example.

MODES FOR CARRYING OUT THE INVENTION

[Embodiments]

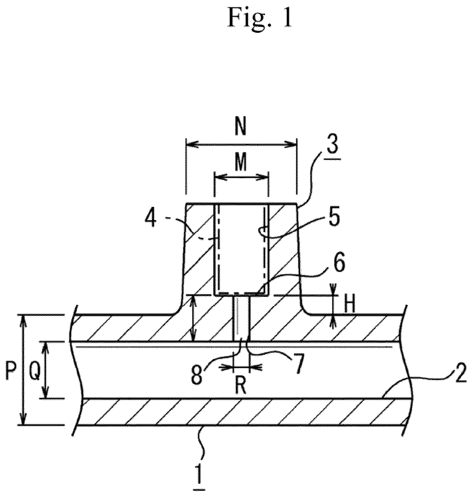

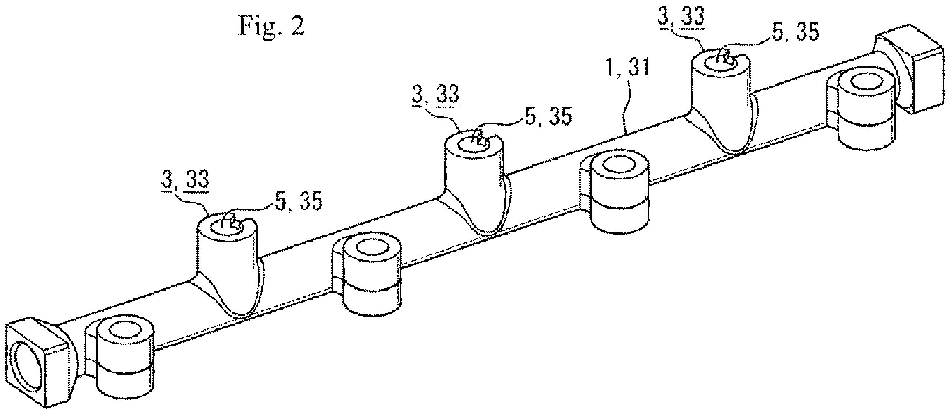

The embodiments 1 to 15 of the present invention will be explained below. As shown in Fig. 1, (1) is a fuel rail body. The fuel rail body (1) is assembled to an engine having a plurality of cylinders. In addition, the fuel rail body (1) has a long tubular shape provided with a fuel passage (2) formed in an axial direction the fuel rail body (1). As shown in Fig. 2, a plurality of bosses (3) is formed at equal intervals to protrude from an outer peripheral surface of the fuel rail body (1). Note that the fuel rail of the embodiments 1 to 15 of the present invention can be used not only for the liquid fuel such as gasoline but also for the gas fuel such as hydrogen gas.

A receiving recess (5) is provided on each of the plurality of bosses (3) for inserting a mating member (4) into the receiving recess (5). A branch hole (7) is provided on one end portion (6) of the receiving recess (5) at the side nearer to the fuel rail body (1) continuously from the receiving recess (5) to communicate with the fuel passage (2). In addition, a diameter R of the branch hole (7) is uniform (even) from one end portion to the other portion of the branch hole (7) and the cross-sectional area of the branch hole (7) is uniform (even).

In the fuel rail configured as described above, as shown in Fig. 1, the stress of the fuel pressure is concentrated on a communication port (8) between the fuel passage (2) of the fuel rail body (1) and the branch hole (7) and the surrounding portion of the communication port (8) and the maximum stress is generated at that portion. Therefore, the stress generated at the communication port (8) was analyzed. The above described stress analysis will be explained below.

First, the parameters of the fuel rail having the configuration of the embodiments 1 to 15 shown in Fig. 1 are shown in Table 1 below. Namely, an outer diameter P and an inner diameter Q of the fuel rail body (1), a diameter R of the branch hole (7) and an inner diameter M and an outer diameter N of the boss (3) are shown in Table 1.

[Table 1]

|  | embodiment 1 | embodiment 2 | embodiment 3 | embodiment 4 | embodiment 5 | embodiment 6 | embodiment 7 | embodiment 8 |
|---|---|---|---|---|---|---|---|---|
| outer diameter P of fuel rail body | 18 mm | 18 mm | 18 mm | 20 mm | 20 mm | 20 mm | 22 mm | 22 mm |
| innerdiameter Q of fuel rail body | 10 mm | 10 mm | 10 mm | 10 mm | 10 mm | 10 mm | 10 mm | 10 mm |
| diameter R of branch hole | 3 mm | 3 mm | 3 mm | 3 mm | 3 mm | 3 mm | 3 mm | 3 mm |
| innerdiameter M of boss | 9.4 mm | 9.4 mm | 9.4 mm | 9.4 mm | 9.4 mm | 9.4 mm | 9.4 mm | 9.4 mm |
| outer diameter N of boss | 23 mm | 25 mm | 27 mm | 23 mm | 25 mm | 27 mm | 23 mm | 25 mm |
|  | embodiment 9 | embodiment 10 | embodiment 11 | embodiment 12 | embodiment 13 | embodiment 14 | embodiment 15 |  |
| outer diameter P of fuel rail body | 22 mm | 20 mm | 20 mm | 20 mm | 20 mm | 20 mm | 22 mm |  |
| innerdiameter Q of fuel rail body | 10 mm | 10 mm | 10 mm | 10 mm | 10 mm | 10 mm | 10 mm |  |
| diameter R of branch hole | 3 mm | 4 mm | 4 mm | 4 mm | 5 mm | 5 mm | 5 mm |  |
| innerdiameter M of boss | 9.4 mm | 9.4 mm | 9.4 mm | 9.4 mm | 9.4 mm | 9.4 mm | 9.4 mm |  |
| outer diameter N of boss | 27 mm | 23 mm | 25 mm | 27 mm | 23 mm | 25 mm | 27 mm |  |

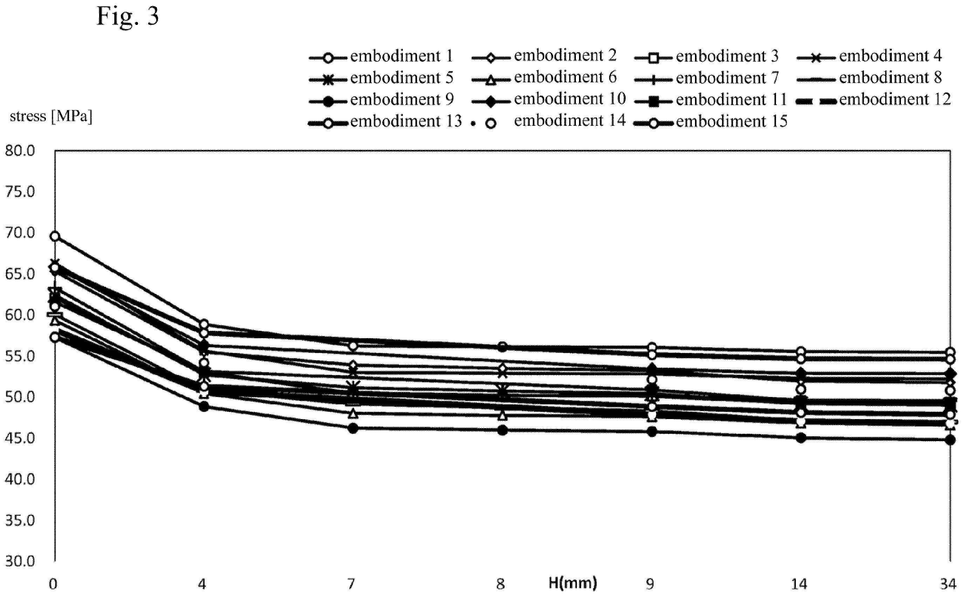

In the embodiments 1 to 15, the stress analysis was performed in the vicinity of the communication port (8) while changing the length H which is calculated by subtracting the wall thickness of the fuel rail body (1) from the axial length of the branch hole (7) as follows. The above described analysis results of the embodiments 1 to 15 are shown in Table 2 and the line graphs based on Table 2 are shown in Fig. 3.

(Embodiment 1 to embodiment 9)

H: 0 mm, 4 mm, 7 mm, 8 mm, 9 mm, 14 mm, 34 mm

(Embodiment 10 to embodiment 15)

H: 0 mm, 4 mm, 9 mm, 14 mm, 34 mm

[Table 2]

| H (mm) | embodiment 1 | embodiment 2 | embodiment 3 | embodiment 4 | embodiment 5 | embodiment 6 | embodiment 7 | embodiment 8 |
|---|---|---|---|---|---|---|---|---|
| 0 | 69.6 | 65.3 | 62.1 | 66.3 | 62.4 | 59.3 | 63.3 | 60.1 |
| 4 | 58.9 | 55.5 | 53.0 | 55.6 | 52.7 | 50.4 | 53.1 | 50.8 |
| 7 | 56.3 | 53.9 | 50.5 | 53.0 | 51.1 | 48.0 | 50.4 | 49.2 |
| 8 | 56.1 | 53.5 | 50.2 | 52.9 | 50.7 | 47.8 | 50.2 | 48.7 |
| 9 | 56.1 | 53.2 | 50.1 | 52.8 | 50.4 | 47.6 | 50.2 | 48.4 |
| 14 | 55.5 | 52.0 | 49.3 | 52.3 | 49.2 | 46.9 | 49.6 | 47.1 |
| 34 | 55.5 | 51.8 | 49.1 | 52.2 | 49.0 | 46.6 | 49.6 | 47.0 |
| H (mm) | embodiment 9 | embodiment 10 | embodiment 11 | embodiment 12 | embodiment 13 | embodiment 14 | embodiment 15 | |
| 0 | 57.3 | 65.9 | 61.6 | 58.2 | 65.8 | 61.0 | 57.3 | |
| 4 | 48.9 | 56.3 | 53.2 | 50.7 | 57.8 | 54.2 | 51.3 | |
| 7 | 46.2 | --- | --- | --- | --- | --- | --- | |
| 8 | 46.0 | --- | --- | --- | --- | --- | --- | |
| 9 | 45.8 | 53.4 | 50.9 | 47.9 | 55.2 | 52.2 | 48.9 | |
| 14 | 45.1 | 52.9 | 49.6 | 47.1 | 54.7 | 51.0 | 48.1 | |
| 34 | 44.8 | 52.9 | 49.4 | 46.8 | 54.6 | 50.8 | 47.9 | |

As shown in Table 2 and Fig. 3, in all of the embodiments 1 to 15, there was a tendency that the stress decreased as H became longer. In particular, it was confirmed that the stress decreased at the approximately maximum when H is 7 mm or more. From the above described result, it was revealed that the stress concentrated on the communication port (8) could be efficiently reduced when H is 7 mm or more regardless of the outer diameter and the inner diameter of the fuel rail body (1), the wall thickness of boss (3) (the value calculated by subtracting the inner diameter M of the boss (3) from the outer diameter N) and the diameter of the branch hole (7).

In addition, from the analysis results of the embodiments 1 to 15, the values of the stress were approximately uniform when H was 7 mm to 34 mm as shown in Fig. 3. It is considered that the effect of reducing the stress is approximately maintained even if H is 34 mm or more. However, if the axial length of the branch hole (7) is too long, the protruding height of the boss (3) protruded from the fuel rail body (1) becomes high. Thus, there is a problem in the layout performance of the entire fuel rail. In addition, this leads to the increase of the weight of the fuel rail body (1). Thus, there are risks of the deterioration of the fuel consumption performance and the increase of the product cost.

From the viewpoint that the effect of reducing the stress, there is almost no change or there is little change of the effect even if H is 14 mm or more. It can be considered that H is made less than 14 mm.

In addition, the engine vibration is generally large in the range of 1000 Hz or less. Thus, when the natural frequency of the fuel rail is 1000 Hz or less, large vibration stress occurs in the fuel rail due to the resonance. From the above described fact, when the weight of the fuel rail becomes 1.5 times heavier than the usual, the natural frequency may become 1000 Hz or less. Thus, the possibility of causing the resonance increases. Accordingly, it can be considered as a guide that the upper limit value of H is the value when the weight of the fuel rail is 1.5 times heavier than the usual.

For example, when 0.5 times of the weight of the fuel rail body (1) is distributed to the bosses (3), the weight of the fuel rail becomes 1.5 times. When 0.5 times of the weight of the fuel rail body (1) is converted into the length, 0.5 times of the overall length of the fuel rail body (1) is the total sum of H of each of the bosses (3) to which the fuel pressure is applied. The average value of the length H of each the bosses (3) is calculated by dividing the total sum of H of the bosses (3) by the number of the bosses (3). This average value can be considered as the upper limit value of H.

As described above, it can be said that the upper limit value of H can be calculated by the following formula.

$$H = \text{(the overall length of the fuel rail body (1))} \times 0.5 \, / \, \text{(the number of the bosses (3) to which the fuel pressure is applied)}$$

Here, the number of the bosses (3) to which the fuel pressure is applied is (the number of the injector bosses + the number of the sensor bosses + the number of inlet bosses).

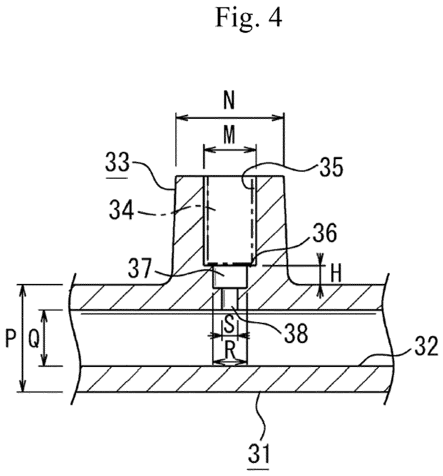

Then, the embodiments 16 to 24 of the present invention will be explained. As shown in Fig. 4, (31) is a fuel rail body. The fuel body (31) has a long tubular shape provided with a fuel passage (32) formed in an axial direction the fuel body (31). As shown in Fig. 2, a plurality of bosses (33) is formed at equal intervals to protrude from an outer peripheral surface of the fuel rail body (31).

A receiving recess (35) is provided on each of the plurality of bosses (33) for inserting a mating member (34) into the receiving recess (35). A branch hole (37) is provided on one end portion (36) of the receiving recess (35) at the side nearer to the fuel rail body (31) continuously from receiving recess (35) to communicate with the fuel passage (32) of the fuel rail body (31). Although the cross-sectional area of the branch hole (7) is uniform from one end to the other end of the branch hole (7) in the embodiments 1 to 15, the cross-sectional area of the branch hole (37) is different between one end and the other end of the branch hole (37) in the embodiments 16 to 24. Namely, an inner diameter S of one end of the branch hole (37) is 3 mm at the side nearer to the fuel passage (32) of the fuel rail body (31) and an inner diameter R of the other end of the branch hole (37) is 4 mm at the side nearer to the receiving recess (35) of the boss (33).

In the fuel rail having the above described configuration, the stress due to the fuel pressure is concentrated on the communication port (38) between the fuel passage (32) of the fuel rail body (31) and the branch hole (37) and the surrounding portion of the communication port (38) and the maximum stress is generated at that portion. Therefore, the stress at the communication port (38) was analyzed. This stress analysis will be explained below.

First, the parameters of the embodiments 16 to 24 of the fuel rail having the configuration shown in Fig. 4 will be shown in Table 3. Namely, the outer diameter P and the inner diameter Q of the fuel rail body (31), the diameters R, S of the branch hole (37), and the inner diameter M and the outer diameter N of the boss (33) are shown in table 3. In the embodiments 16 to 24, the stress analysis was performed in the vicinity of the communication port (38) in condition that the length H calculated by subtracting the wall thickness of the fuel rail body (31) from the axial length of the branch hole (37) was changed in the range of 0 mm, 4 mm, 7 mm, 8 mm, 9 mm, 14 mm and 34 mm.

[Table 3]

| | embodiment 16 | embodiment 17 | embodiment 18 | embodiment 19 | embodiment 20 | embodiment 21 | embodiment 22 | embodiment 23 | embodiment 24 |
|---|---|---|---|---|---|---|---|---|---|
| outer diameter P of fuel rail body | 18 mm | 18 mm | 18 mm | 20 mm | 20 mm | 20 mm | 22 mm | 22 mm | 22 mm |
| inner diameter Q of fuel rail body | 10 mm | 10 mm | 10 mm | 10 mm | 10 mm | 10 mm | 10 mm | 10 mm | 10 mm |
| diameter R of branch hole | 4 mm | 4 mm | 4 mm | 4 mm | 4 mm | 4 mm | 4 mm | 4 mm | 4 mm |
| diameter S of branch hole | 3 mm | 3 mm | 3 mm | 3 mm | 3 mm | 3 mm | 3 mm | 3 mm | 3 mm |
| inner diameter M of boss | 9.4 mm | 9.4 mm | 9.4 mm | 9.4 mm | 9.4 mm | 9.4 mm | 9.4 mm | 9.4 mm | 9.4 mm |

(continued)

|  | embodiment 16 | embodiment 17 | embodiment 18 | embodiment 19 | embodiment 20 | embodiment 21 | embodiment 22 | embodiment 23 | embodiment 24 |
|---|---|---|---|---|---|---|---|---|---|
| outer diameter N of boss | 23 mm | 25 mm | 27 mm | 23 mm | 25 mm | 27 mm | 23 mm | 25 mm | 27 mm |

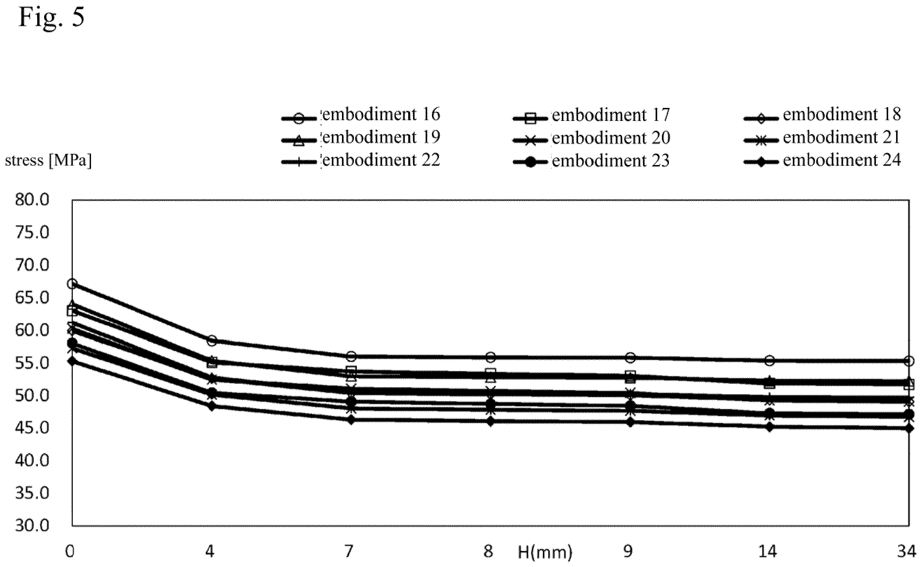

The above described analysis results of the embodiments 16 to 24 are shown in Table 4 and the line graphs based on Table 4 are shown in Fig. 5.

[Table 4]

| H (mm) | embodiment 16 | embodiment 17 | embodiment 18 | embodiment 19 | embodiment 20 | embodiment 21 | embodiment 22 | embodiment 23 | embodiment 24 |
|---|---|---|---|---|---|---|---|---|---|
| 0 | 67.1 | 63.0 | 59.9 | 64.0 | 60.2 | 57.3 | 61.2 | 58.0 | 55.3 |
| 4 | 58.4 | 55.1 | 52.6 | 55.3 | 52.4 | 50.1 | 52.8 | 50.4 | 48.4 |
| 7 | 56.0 | 53.7 | 50.4 | 52.9 | 51.0 | 48.0 | 50.4 | 49.1 | 46.3 |
| 8 | 55.9 | 53.3 | 50.2 | 52.8 | 50.7 | 47.8 | 50.3 | 48.7 | 46.1 |
| 9 | 55.8 | 53.0 | 50.0 | 52.8 | 50.4 | 47.7 | 50.2 | 48.4 | 45.9 |
| 14 | 55.3 | 51.8 | 49.3 | 52.3 | 49.2 | 46.9 | 49.7 | 47.3 | 45.2 |
| 34 | 55.3 | 51.7 | 49.1 | 52.2 | 49.1 | 46.7 | 49.7 | 47.1 | 45.0 |

As shown in Table 4 and Fig. 5, in all of the embodiments 16 to 24, there was a tendency that the stress decreased as H became longer. In particular, it was confirmed that the stress decreased at the approximately maximum when H was 7 mm or more. From the above described result, it was revealed that the stress concentrated on the communication port (38) could be efficiently reduced when H was 7 mm or more regardless of the outer diameter and the inner diameter of the fuel rail body (31), the wall thickness of boss (3) (the value calculated by subtracting the inner diameter M of the boss (3) from the outer diameter N) and the diameter of the branch hole (37).

In addition, from the analysis results of the embodiments 16 to 24, the values of the stress were approximately uniform when H was 7 mm to 34 mm as shown in Fig. 5. It is considered that the effect of reducing the stress is approximately maintained uniform if H is 34 mm or more. However, if the axial length of the branch hole (37) is too long, the protruding height of the boss (33) protruded from the fuel rail body (1) becomes high. Thus, there is a problem in the layout performance of the entire fuel rail. In addition, this leads to the increase of the weight of the fuel rail body (1). Thus, there are risks of the deterioration of the fuel consumption performance and the increase of the product cost.

From the viewpoint that there is almost no change or there is little change in the effect of reducing the stress even if H is 14 mm or more, it can be considered that H is made less than 14 mm.

In addition, the engine vibration is generally large in the range of 1000 Hz or less. Thus, when the natural frequency of the fuel rail is 1000 Hz or less, large vibration stress occurs in the fuel rail due to the resonance. Therefore, when the weight of the fuel rail becomes 1.5 times heavier than the usual, the natural frequency may become 1000 Hz or less. Thus, the possibility of causing the resonance increases. Accordingly, it can be considered as a guide that the upper limit value of H is the value when the weight of the fuel rail is 1.5 times heavier than the usual.

For example, when 0.5 times of the weight of the fuel rail body (31) is distributed to the bosses (33) to which the fuel pressure is applied, the weight of the fuel rail becomes 1.5 times. When 0.5 times of the weight of the fuel rail body (31) is converted into the length, 0.5 times of the overall length of the fuel rail body (31) is the total sum of H of each of the bosses (33) to which the fuel pressure is applied. The average value of the length H of each the bosses (33) is calculated by dividing the total sum of H of the bosses (33) by the number of the bosses (33). This average value can be considered as the upper limit value of H.

As described above, it can be said that the upper limit value of H can be calculated by the following formula.

H = (the overall length of the fuel rail body (1)) × 0.5 / (the number of the bosses (33) to which the fuel pressure is applied)

Here, the number of the bosses (33) to which the fuel pressure is applied is (the number of the injector bosses + the number of the sensor bosses + the number of inlet bosses).

The effect of reducing the stress can be obtained also in the fuel rail having the configuration different from the above described embodiment when H is 7 mm or more.

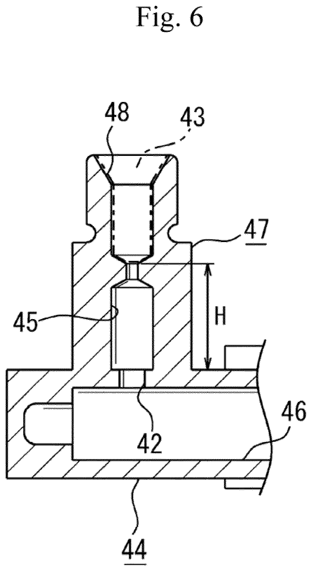

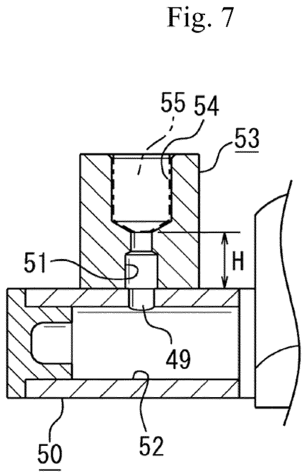

Namely, in the fuel rail of the embodiment 25 shown in Fig. 6 and the embodiment 26 shown in Fig. 7, the cross-sectional area of the branch hole (45) (51) is different between one end and the other end similar to the above described embodiments 16 to 24, the cross-sectional area of the branch hole (45) (51) is greater at the center portion in the axial direction of the branch hole than both end portions (i.e., the portion nearer to the fuel passage (46)(52) of the fuel rail body (40) (50) and the portion nearer to the receiving recess (48), (54) different from the embodiments 16 to 24 where the cross-sectional area of one end portion nearer to the fuel passage (32) is smaller than the cross-sectional area of the other end portion nearer to the receiving recess (35) of the bosses (33). Note that a boss (47) shown in the embodiment 25 is used as an inlet pipe and a boss (57) shown in the embodiment 26 is used as a sensor boss.

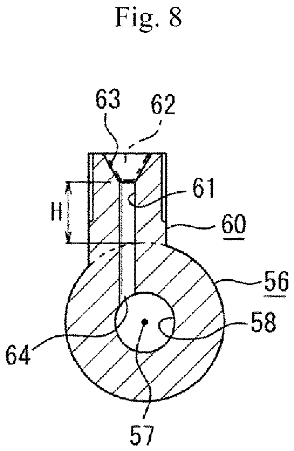

In the fuel rail of the embodiment 27 shown in Fig. 8, a boss (60) is formed to protrude at the position distant from an axial center portion (57) in a cross-section of the fuel passage (58) of the fuel rail body (56) and a branch hole (61) is formed and the cross-sectional area of the branch hole (61) is uniform from one end to the other end.

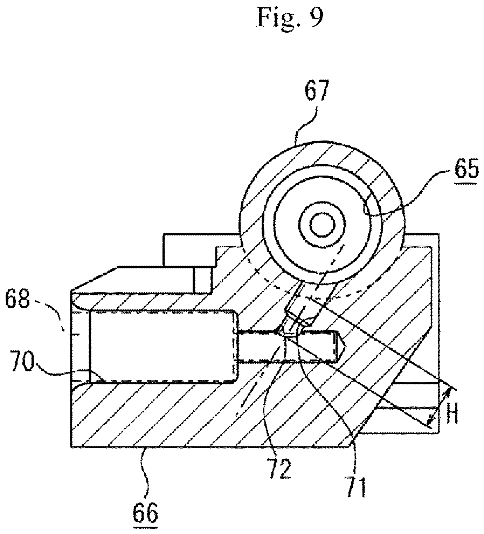

The above described branch hole (7) (37) (45) (51) (61) of the embodiments 1 to 27 is formed in the vertical direction with respect to the fuel passage (2) (32) (46) (52) (58) of the fuel rail body (1) (31) (44) (50) (56). On the other hand, in the fuel rail of the embodiment 28 shown in Fig. 9, a branch hole (71) is formed in an inclined direction with respect to the fuel passage (65) and a boss (66) of the present embodiment is an injector holder which is not an immediately above type.

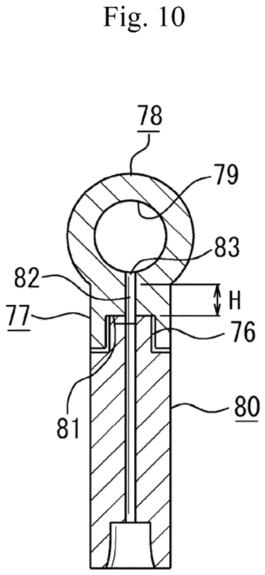

In the fuel rail of the embodiment 29 shown in Fig. 10, a boss (77) is provided on the fuel rail body (78) for inserting one end (76) of an injector cup adapter which is a mating member (80) into the boss (77).

As described above, in all of the above described embodiments, the axial length of the branch hole (7) (37) (45) (61) (71) (82) is longer than the wall thickness of the fuel rail body (1) (31) (44) (50) (56) (67) (78). Thus, the effect of reducing the stress due to the fuel pressure can be obtained at the communication port (8) (38) (42) (49) (64) (72) (83) between the fuel passage (2) (32) (46) (52) (58) (65) (79) of the fuel rail body (1) (31) (44) (50) (56) (67) (78) and the branch hole (7) (37) (45) (61) (71) (82) and the surrounding portion of the communication port regardless of the wall thickness of the fuel rail body (1) (31) (44) (50) (56) (67) (78) and the boss (3) (33) (47) (53) (60) (66) (77), the outer diameter or the inner diameter of the fuel rail body (1) (31) (44) (50) (56) (67) (78) and the material of the fuel rail body (1) (31) (44) (50) (56) (67) (78) and the boss (3) (33) (47) (53) (60) (66) (77).

[Description of the Reference Numerals]

1, 31, 44, 50, 56, 67, 78: fuel rail body;
2, 32, 46, 52, 58, 65, 79: fuel passage;
3, 33, 47, 53, 60, 66, 77: boss;
4, 34, 43, 55, 62, 68, 80: mating member;
5, 35, 48, 54, 63, 70, 81: receiving recess;
6, 36: end portion;
7, 37, 45, 51, 61, 71, 82: branch hole;
8, 38, 42, 49, 64, 72, 83: communication port;

**Claims**

**1.** A fuel rail assembled to an engine having a plurality of cylinders, the fuel rail comprising:

a fuel rail body provided with a fuel passage in an axial center direction of the fuel rail body, wherein
a boss is provided on an outer peripheral surface of the fuel rail body to protrude from the outer peripheral surface,
a receiving recess of a mating member is provided on an inner periphery of the boss,
a branch hole is provided between one end portion of the receiving recess of the boss and the fuel passage of the fuel rail body for making the fuel passage communicate with the receiving recess, the one end portion being nearer to the fuel rail body than the other end portion, and
an axial length of the branch hole is greater than a wall thickness of the fuel rail body.

**2.** A fuel rail assembled to an engine having a plurality of cylinders, the fuel rail comprising:

a fuel rail body provided with a fuel passage in an axial center direction of the fuel rail body, wherein
a boss is provided on an outer peripheral surface of the fuel rail body to protrude from the outer peripheral surface,
a receiving recess of a mating member is provided on an inner periphery of the boss,
a branch hole is provided between one end portion of the receiving recess of the boss and the fuel passage of the fuel rail body for making the fuel passage communicate with the receiving recess, the one end portion being nearer to the fuel rail body than the other end portion, and
a length H which is calculated by subtracting a wall thickness of the fuel rail body from an axial length of the branch hole is 7 mm or more.

3. The fuel rail according to claim 1 or 2, wherein
a cross-sectional area of the branch hole is uniform in an axial direction of the branch hole.

4. The fuel rail according to claim 1 or 2, wherein
a cross-sectional area of the branch hole is greater at both end portions of the branch hole than a center portion of the branch hole.

5. The fuel rail according to claim 1 or 2, wherein
a cross-sectional area of the branch hole is greater at one end portion of the branch hole than the other portion of the branch hole.

Fig. 1

Fig. 2

Fig. 3

EP 4 296 501 A1

Fig. 4

EP 4 296 501 A1

Fig. 5

Fig. 6

Fig. 7

Fig. 8

Fig. 9

Fig. 10

Related Art

Fig. 11

<div align="center">

**INTERNATIONAL SEARCH REPORT**

</div>

| | International application No. |
|---|---|
| | **PCT/JP2022/018356** |

| A. | CLASSIFICATION OF SUBJECT MATTER |
|---|---|

*F02M 55/02*(2006.01)i
FI: F02M55/02 360A

According to International Patent Classification (IPC) or to both national classification and IPC

| B. | FIELDS SEARCHED |
|---|---|

Minimum documentation searched (classification system followed by classification symbols)

    F02M55/02

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2002-310035 A (OTICS CORP) 23 October 2002 (2002-10-23) | 1-3 |
|   |     paragraph [0002], fig. 5 | |
| Y | | 5 |
| A | | 4 |
| Y | JP 2002-242791 A (OTICS CORP) 28 August 2002 (2002-08-28) | 5 |
|   |     paragraphs [0013]-[0016], fig. 2 | |
| A | JP 2001-227431 A (USUI INTERNATL IND CO LTD) 24 August 2001 (2001-08-24) | 1-5 |
|   |     paragraph [0013], fig. 5 | |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **29 June 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/018356**

| Patent document cited in search report | | | Publication date (day/month/year) | Patent family member(s) | Publication date (day/month/year) |
|---|---|---|---|---|---|
| JP | 2002-310035 | A | 23 October 2002 | (Family: none) | |
| JP | 2002-242791 | A | 28 August 2002 | (Family: none) | |
| JP | 2001-227431 | A | 24 August 2001 | US 6415768 B1 column 4, lines 50-64, fig. 5 | |

Form PCT/ISA/210 (patent family annex) (January 2015)

**EP 4 296 501 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10205674 B